# EUROPEAN PATENT APPLICATION

(11) **EP 3 466 531 A1**
(43) Date of publication of application: **10.04.2019**
(21) Application number: 17810117.6
(22) Date of filing: 25.05.2017
(51) Int. Cl.: B01J 19/00, C01G 53/00, H01M 4/525

(54) **REACTION APPARATUS FOR OBTAINING INORGANIC PARTICLES, AND METHOD FOR PRODUCING INORGANIC PARTICLES**

(30) Priority: 07.06.2016 JP 2016113892
(71) Applicant: Tanaka Chemical Corporation, Fukui-shi Fukui 910-3131 (JP)
(72) Inventor: HANAMURA Naoya, Fukui-shi Fukui 910-3131 (JP); YASUDA Taiki, Fukui-shi Fukui 910-3131 (JP); HATA Mikio, Fukui-shi Fukui 910-3131 (JP)
(74) Representative: Weickmann & Weickmann PartmbB
(86) International application number: PCT/JP2017/019553
(87) International publication number: WO 2017/212937

(57) **Abstract**

The present invention provides a reaction apparatus and a method for manufacturing inorganic particles which can improve the dispersibility of a raw material liquid in a mother liquid, improve fundamental properties such as a bulk density, a tapping density, a particle diameter, and a BET specific surface area in a balanced manner without impairing the fundamental properties, and obtain particles having an excellent crystallinity and a higher degree of sphericity.

The reaction apparatus includes: a pH adjusting tank for adjusting a pH of a mother liquid stored therein; a pH adjuster feeding means for feeding a pH adjuster to the pH adjusting tank; a circulating path for continuously extracting a portion of the mother liquid having the adjusted pH from the pH adjusting tank, and returning the extracted mother liquid to the pH adjusting tank; and a raw material liquid feeding means for feeding a raw material liquid to the mother liquid circulating in the circulating path.

## Description

### Technical Field

The present invention relates to a reaction apparatus for causing a mother liquid to continuously circulate to obtain inorganic particles as a reaction product, and a method for manufacturing inorganic particles in which a mother liquid is continuously circulated.

### Background Art

As a conventional apparatus for manufacturing inorganic particles, an apparatus has been proposed which simultaneously charges an aqueous solution containing a transition metal salt as a raw material and an alkaline solution into a reaction tank from the upper part of the reaction tank, introduces the aqueous solution containing a transition metal salt into the reaction tank from a feed opening provided in the lower part of the reaction tank, and flows the aqueous solution upward from the bottom of the reaction tank to cause the aqueous solution to collide with coprecipitating microcrystals falling downward, to obtain a transition metal hydroxide or oxide from a capturing part provided in the lower part of the equipment (Patent Literature 1).

However, Patent Literature 1 has the following problems: the dispersion of the aqueous solution containing a transition metal salt as a raw material liquid in the reaction tank is not sufficient, whereby various physical properties of inorganic particles such as improvements in a bulk density and a tapping density, crystal growth of particles (that is, improvement in a particle diameter), and improvement in a crystallinity are not sufficiently obtained.

Then, an apparatus for manufacturing inorganic particles has been proposed in which a raw material liquid containing a reaction substance which should be newly added is injected into an external circulating path continuously extracting a portion of a liquid in a distributor, and returning it to the distributor via a returning path (Patent Literature 2).

However, in Patent Literature 2, the dispersibility of the raw material liquid in a mother liquid is improved, but the crystal growth (that is, improvement in a particle diameter) of particles is not sufficient. Patent Literature 2 causes a problem that spherical particles are less likely to be obtained, that is, a problem that various excellent physical properties of inorganic particles are not still obtained.

### Document List

### Patent Literatures

Patent Literature 1: Japanese Patent Application Publication No. 2003-86182
Patent Literature 2: Japanese Patent Application Publication No. 2013-151383

### Summary of Invention

### Technical Problem

In view of the above circumstances, it is an object of the present invention to provide a reaction apparatus and a method for manufacturing inorganic particles which can improve the dispersibility of a raw material liquid in a mother liquid, improve fundamental properties such as a bulk density, a tapping density, a particle diameter, and a BET specific surface area in a balanced manner without impairing the fundamental properties, and obtain particles having an excellent crystallinity and a higher degree of sphericity.

### Solution to Problem

An aspect of the present invention is a reaction apparatus including: a pH adjusting tank for adjusting a pH of a mother liquid stored therein; a pH adjuster feeding means for feeding a pH adjuster to the pH adjusting tank; a circulating path for continuously extracting a portion of the mother liquid having the adjusted pH from the pH adjusting tank, and returning the extracted mother liquid to the pH adjusting tank; and a raw material liquid feeding means for feeding a raw material liquid to the mother liquid circulating in the circulating path.

In the aspect of the present invention, an additional pH adjuster is newly fed to the mother liquid containing the raw material liquid in the pH adjusting tank (when the reaction apparatus is started, the pH adjuster is fed to the mother liquid which does not contain the pH adjuster), but the raw material liquid is not fed. In the circulating path, an additional raw material liquid is newly fed to the mother liquid containing the raw material liquid (when the reaction apparatus is started, the raw material liquid is fed to the mother liquid which does not contain the raw material liquid), but the pH adjuster is not fed.

An aspect of the present invention is the reaction apparatus, wherein the raw material liquid is fed to the mother liquid from a direction parallel to, or an acute angle direction with respect to, a flow direction of the mother liquid circulating in the circulating path.

In the aspect, the raw material liquid is not fed to the mother liquid from a direction orthogonal to the flow direction of the mother liquid circulating in the circulating path.

An aspect of the present invention is the reaction apparatus, wherein the circulating path is a tubular body, and the raw material liquid is fed by the raw material liquid feeding means from a region of the tubular body.

An aspect of the present invention is the reaction apparatus, wherein an overflow pipe for taking out a reaction product is provided in the pH adjusting tank.

An aspect of the present invention is the reaction apparatus for manufacturing a positive electrode active material precursor of a rechargeable battery.

An aspect of the present invention is a method for manufacturing inorganic particles including the steps of: continuously feeding a raw material liquid to a mother liquid circulating in a circulating path for continuously extracting a portion of the mother liquid having an adjusted pH from a pH adjusting tank, and returning the extracted mother liquid to the pH adjusting tank; and continuously feeding a pH adjuster to the pH adjusting tank storing the mother liquid with the fed raw material liquid, to adjust a pH of the mother liquid.

In the aspect of the present invention, an additional pH adjuster is newly fed to the mother liquid containing the raw material liquid in the pH adjusting tank (when the manufacturing method of the present invention is started, the pH adjuster is fed to the mother liquid which does not contain the pH adjuster), but the raw material liquid is not fed. In the circulating path, an additional raw material liquid is newly fed to the mother liquid containing the raw material liquid (when the manufacturing method of the present invention is started, the raw material liquid is fed to the mother liquid which does not contain the raw material liquid), but the pH adjuster is not fed.

An aspect of the present invention is the method for manufacturing inorganic particles, wherein the raw material liquid is fed to the mother liquid from a direction parallel to, or an acute angle direction with respect to, a flow direction of the mother liquid circulating in the circulating path.

In the aspect, the raw material liquid is not fed to the mother liquid from a direction orthogonal to the flow direction of the mother liquid circulating in the circulating path.

An aspect of the present invention is the method for manufacturing inorganic particles, wherein the circulating path is a tubular body; and the raw material liquid is fed from a region of the tubular body.

An aspect of the present invention is the method for manufacturing inorganic particles, wherein an overflow pipe for taking out the inorganic particles is provided in the pH adjusting tank.

An aspect of the present invention is the method for manufacturing inorganic particles, wherein a value of a flow rate of the mother liquid circulating in the circulating path/a feed flow rate of the raw material liquid is 400 or more and less than 2400.

An aspect of the present invention is the method for manufacturing inorganic particles, wherein the raw material liquid contains a transition metal ion.

An aspect of the present invention is the method for manufacturing inorganic particles, wherein the pH adjuster further contains a complexing agent.

An aspect of the present invention is the method for manufacturing inorganic particles, wherein the inorganic particles manufacture a positive electrode active material precursor of a rechargeable battery.

### Effects of Invention

By feeding the raw material liquid to the mother liquid circulating in the circulating path while feeding the pH adjuster to the pH adjusting tank storing the mother liquid according to the aspect of the present invention, the dispersibility of the raw material liquid in the mother liquid in the circulating path can be improved, whereby the crystal growth potential of the particles as a reaction product from the raw material liquid is improved, which can improve fundamental properties such as a bulk density, a tapping density, a particle diameter, and a BET specific surface area in a balanced manner without impairing the fundamental properties, and obtain particles having an excellent crystallinity and a higher degree of sphericity.

According to the aspect of the present invention, the raw material liquid is fed to the mother liquid from a direction parallel to, or an acute angle direction with respect to, the flow direction of the mother liquid circulating in the circulating path, whereby the raw material liquid can be prevented from adhering to the inner surface of the circulating path, and the dispersibility of the raw material liquid in the mother liquid is further improved.

According to the aspect of the present invention, the circulating path is the tubular body, and the raw material liquid is fed from the region of the tubular body, whereby the structure of the feed region of the raw material liquid in the circulating path can be simplified, and therefore, the whole structure of the circulating path can be simplified.

According to the aspect of the present invention, the flow rate of the mother liquid circulating in the circulating path/the feed flow rate of the raw material liquid is 400 or more and less than 2400, which can improve fundamental properties such as a bulk density, a tapping density, a particle diameter, and a BET specific surface area in a balanced manner without impairing the fundamental properties, and obtain particles having an excellent crystallinity and a higher degree of sphericity.

### Brief Description of Drawings

[Fig. 1] A cross-sectional side view of a reaction apparatus according to an embodiment example of the present invention.
[Fig. 2] An SEM image (× 5000) of transition metal hydroxide particles obtained in Example 1.
[Fig. 3] An SEM image (× 5000) of transition metal hydroxide particles obtained in Example 2.
[Fig. 4] An SEM image (× 5000) of transition metal hydroxide particles obtained in Example 3.
[Fig. 5] An SEM image (× 5000) of transition metal hydroxide particles obtained in Example 4.
[Fig. 6] An SEM image (× 5000) of transition metal hydroxide particles obtained in Example 5.
[Fig. 7] An SEM image (× 5000) of transition metal hydroxide particles obtained in Example 6.
[Fig. 8] An SEM image (× 5000) of transition metal hydroxide particles obtained in Comparative Example 1.
[Fig. 9] An SEM image (× 5000) of transition metal hydroxide particles obtained in Comparative Example 2.
[Fig. 10] An SEM image (× 5000) of transition metal hydroxide particles obtained in Comparative Example 3.
[Fig. 11] An SEM image (× 5000) of transition metal hydroxide particles obtained in Comparative Example 4.

### Description of Embodiments

Thereafter, the present invention will be described in detail. First, an embodiment example of a reaction apparatus of the present invention will be described below with reference to the drawings.

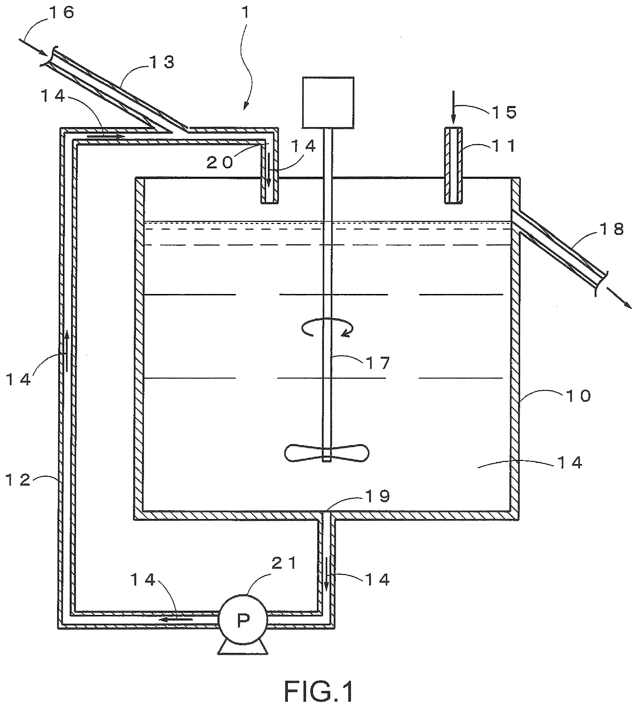

As shown in Fig. 1, a reaction apparatus 1 according to an embodiment example of the present invention includes a pH adjusting tank 10 for adjusting the pH of a mother liquid 14 stored therein, a pH adjuster feeding means 11 for feeding a pH adjuster 15 to the pH adjusting tank 10, a circulating path 12 for continuously extracting a portion of the mother liquid 14 having the adjusted pH from the pH adjusting tank 10, and continuously returning the extracted mother liquid 14 to the pH adjusting tank 10, and a raw material liquid feeding means 13 for feeding a raw material liquid 16 to the mother liquid 14 circulating in the circulating path 12.

The pH adjuster feeding means 11 provided in the pH adjusting tank 10 is a tubular body including one end part communicated with the pH adjusting tank 10 and another end part communicated with a pH adjuster storing tank (not shown) storing the pH adjuster 15. The inner diameter of the tubular body is substantially uniform in any region. In the reaction apparatus 1, the pH of the mother liquid 14 stored in the pH adjusting tank 10 is continuously measured by using a pH measuring instrument (not shown). According to a pH value measured by the pH measuring instrument, a pump (not shown) provided in the pH adjuster storing tank is operated, to feed the pH adjuster 15 to the mother liquid 14 stored in pH adjusting tank 10 from the pH adjuster storing tank via the pH adjuster feeding means 11. According to the aspect, the pH of the mother liquid 14 stored in the pH adjusting tank 10 is adjusted within a predetermined range.

In the pH adjusting tank 10, a stirrer 17 is provided. The stirrer 17 mixes the raw material liquid 16 contained in the mother liquid 14 stored in the pH adjusting tank 10 with the pH adjuster 15 fed from the pH adjuster feeding means 11, to uniformize the whole OH concentration of the mother liquid 14 stored in the pH adjusting tank 10.

The whole OH concentration of the mother liquid 14 is uniformized while the mother liquid 14 is stored in the pH adjusting tank 10, whereby the reaction condition of the mother liquid 14 is stable, and the reaction of the raw material liquid 16 in the mother liquid 14 is stable. Even when the pH adjuster 15 and another ingredient (for example, complexing agent) are added by using the pH adjuster feeding means 11, the whole reaction condition of the mother liquid 14 is uniformized, whereby the reaction of the raw material liquid 16 in the mother liquid 14 is stable.

Particles as the reaction product which has been produced and grown are obtained from the pH adjusting tank 10 storing the mother liquid 14 having the uniformized OH concentration and containing an ingredient derived from the raw material liquid 16. An overflow pipe 18 communicated with the pH adjusting tank 10 is provided in a side surface part located on the top part side of the pH adjusting tank 10. The particles which have been produced and grown are taken out to the outside from the pH adjusting tank 10 via the overflow pipe 18.

As shown in Fig. 1, a mother liquid extracting port 19 (in Fig. 1, provided in the bottom surface of the pH adjusting tank 10) and a mother liquid returning port 20 (in Fig. 1, provided in the top part of the pH adjusting tank 10) are provided in the pH adjusting tank 10. The circulating path 12 is a path of a tubular body connecting the mother liquid extracting port 19 to the mother liquid returning port 20. The inner diameter of the tubular body is substantially uniform in any region. A portion of the mother liquid 14 in the pH adjusting tank 10 is continuously extracted from the mother liquid extracting port 19, and the extracted mother liquid 14 is fed to the circulating path 12. The mother liquid 14 fed to the circulating path 12 circulates in the direction of the mother liquid returning port 20 from the mother liquid extracting port 19 in the circulating path 12. The mother liquid 14 circulating in the direction of the mother liquid returning port 20 from the mother liquid extracting port 19 in the circulating path 12 is fed to the mother liquid returning port 20 from the circulating path 12. Furthermore, the mother liquid 14 is returned into the pH adjusting tank 10 from the mother liquid returning port 20.

The flow of the mother liquid 14 from mother liquid extracting port 19 in the circulating path 12 to the direction of the mother liquid returning port 20 is achieved by a circulating pump 21 provided in the circulating path 12.

The raw material liquid feeding means 13 for feeding the raw material liquid 16 to the mother liquid 14 circulating in the circulating path 12 is provided in the circulating path 12. The raw material liquid feeding means 13 is a tubular body having one end part communicated with the circulating path 12 and another end part communicated with a raw material liquid storing tank (not shown) storing the raw material liquid 16. The inner diameter of the tubular body is substantially uniform in any region. The raw material liquid 16 is fed to the mother liquid 14 flowing in the circulating path 12 from the raw material liquid feeding means 13, whereby the dispersibility of the raw material liquid 16 in the mother liquid 14 is improved in the circulating path 12. Therefore, the reactivity of the raw material liquid 16 in the mother liquid 14 is improved, which causes the particles as the reaction product to be satisfactorily produced, and causes the produced particles to be satisfactorily grown.

Thus, the reactivity of the raw material liquid 16 is improved in the mother liquid 14, and furthermore, as described above, the reaction condition of the mother liquid 14 is stable, and the reaction of the raw material liquid 16 in the mother liquid 14 is also stable, which can improve fundamental properties such as a bulk density, a tapping density, a particle diameter, and a BET specific surface area in a balanced manner without impairing the fundamental properties, and obtain particles having an excellent crystallinity and a higher degree of sphericity.

As shown in Fig. 1, in the reaction apparatus 1, the raw material liquid 16 is fed to the mother liquid 14 from a direction parallel to the flow direction of the mother liquid 14 circulating in the circulating path 12. That is, in the reaction apparatus 1, in a region in which one end part of the raw material liquid feeding means 13 is communicated with the circulating path 12, the flow direction of the raw material liquid 16 circulating in the raw material liquid feeding means 13 and the flow direction of the mother liquid 14 circulating in the circulating path 12 are parallel to each other in plan view. Therefore, in plan view, the raw material liquid feeding means 13 is provided so that the position of one end part side of the raw material liquid feeding means 13 is overlapped with the position of the circulating path 12 in a region communicated with one end part of the raw material liquid feeding means 13. That is, in a region in which the raw material liquid feeding means 13 and the circulating path 12 are communicated with each other, the raw material liquid feeding means 13 is provided in a direction parallel to the circulating path 12 in plan view.

As shown in Fig. 1, in the reaction apparatus 1, in the region in which the raw material liquid feeding means 13 and the circulating path 12 are communicated with each other, the raw material liquid feeding means 13 is provided in the direction of an acute angle (the direction of about 45° in Fig. 1) in side view with respect to the circulating path 12. Therefore, the raw material liquid feeding means 13 is not provided in an orthogonal direction designed in order to generate swirl flow with respect to the circulating path 12 in both plan view and side view.

By the positional relationship between the raw material liquid feeding means 13 and the circulating path 12, the raw material liquid 16 can be prevented from adhering to the inner surface of the circulating path 12. By the positional relationship between the raw material liquid feeding means 13 and the circulating path 12, the raw material liquid 16 can be certainly fed to a region in which the flow velocity of the mother liquid 14 is high, whereby the dispersibility of the raw material liquid 16 in the mother liquid 14 is further improved, and therefore, the reactivity of the raw material liquid 16 in the mother liquid 14 is further improved. The positional relationship can suppress the disorder of the flow of the mother liquid 14 even if the flow of the mother liquid 14 and the flow of the raw material liquid 16 converge, whereby the mother liquid 14 can smoothly circulate in the circulating path 12. Furthermore, the positional relationship provides easy maintenance when the clogging of the raw material liquid 16, or the like occurs.

Thereafter, another embodiment example of the reaction apparatus of the present invention will be described. In the reaction apparatus according to the embodiment example, in a region in which a raw material liquid feeding means and a circulating path are communicated with each other, the raw material liquid feeding means is provided in a direction parallel to the circulating path in plan view, but the feed direction of a raw material liquid to a mother liquid in the circulating path is not particularly limited. For example, even if the raw material liquid feeding means is provided in a direction substantially parallel to, or an acute angle direction with respect to, the circulating path in plan view, the effect of the positional relationship can be obtained.

In the reaction apparatus according to the embodiment example, as described above, in the region in which the raw material liquid feeding means and the circulating path are communicated with each other, the raw material liquid feeding means is provided in a direction parallel to the circulating path in plan view. In place of this constitution, the raw material liquid feeding means may be provided in a direction parallel to the circulating path 12 in the region in which the raw material liquid feeding means and the circulating path are communicated with each other in side view.

As necessary, on the upper stream side of the converging point between the mother liquid of the circulating path and the raw material liquid, that is, on the upper stream side with respect to a region communicated with the raw material liquid feeding means of the circulating path, a flow rate regulating member (for example, funnel or the like) may be set to reduce the inner diameter of the circulating path to change the flow velocity and flow rate of the mother liquid. By setting the flow rate regulating member in the circulating path, the flow velocity and flow rate of the mother liquid are adjusted just before an additional raw material liquid is fed to the mother liquid, whereby the dispersibility of the raw material liquid in the mother liquid can be adjusted.

In the reaction apparatus according to the embodiment example, as necessary, furthermore, a particle size distribution controller may be provided in the reaction apparatus. By providing the particle size distribution controller, particles having a comparatively narrow particle size distribution can be obtained. Examples of the particle size distribution controller include an apparatus including a discharge pump for pumping a portion of the mother liquid and discharging it to the outside of the system after the amount of the mother liquid stored in the pH adjusting tank reaches a predetermined amount, a solid-liquid separator for subjecting the mother liquid discharged to the outside of the system to solid-liquid separation to remove a liquid phase, and producing a concentration slurry of the mother liquid, and a returning piping system for returning the concentration slurry obtained in the solid-liquid separator to the pH adjusting tank. In the reaction apparatus according to the embodiment example, the overflow pipe for continuously taking out the particles from the pH adjusting tank is provided. In place of the constitution, the particles may be taken out in a batch type from the pH adjusting tank without providing the overflow pipe.

Thereafter, an example of a method using the reaction apparatus 1 according to the embodiment example of the present invention will be described. The ingredient of inorganic particles is not particularly limited, and can be suitably selected according to the use application. Herein, a method used for manufacture of transition metal hydroxide particles such as nickel/cobalt/zinc composite hydroxide particles, and nickel/cobalt/magnesium composite hydroxide particles as a positive electrode active material precursor of a nickel hydrogen rechargeable battery as the inorganic particles, and nickel/cobalt/manganese composite hydroxide particles as a positive electrode active material precursor of a lithium rechargeable battery will be described as an example.

When the transition metal hydroxide particles are manufactured in the reaction apparatus 1, an aqueous solution containing a nickel salt, a cobalt salt, and a transition metal salt is used as the raw material liquid 16, and an aqueous solution of an alkali metal hydroxide (for example, sodium hydroxide) is used as the pH adjuster 15. Furthermore, a complexing agent (for example, ammonium ion donor such as ammonia or ammonium sulfate) is fed to the pH adjusting tank 10 together with the pH adjuster 15 by using the pH adjuster feeding means 11. The complexing agent (for example, ammonium ion donor such as ammonia or ammonium sulfate) may be previously dissolved in the raw material liquid 16 and sent with the raw material liquid 16.

By using the circulating pump 21, a portion of the mother liquid 14 having a pH adjusted by the pH adjuster 15 is continuously extracted from the mother liquid extracting port 19 of the pH adjusting tank 10 to the circulating path 12, and the extracted mother liquid 14 is caused to circulate in the circulating path 12. The raw material liquid 16 is continuously fed to the mother liquid 14 flowing in the circulating path 12 by using the raw material liquid feeding means 13. The circulating path 12 continuously returns the mother liquid 14 to which the raw material liquid 16 has been fed, to the pH adjusting tank 10 via the mother liquid returning port 20. The pH adjuster 15 and the complexing agent are continuously fed to the pH adjusting tank 10 storing the mother liquid 14 to which the raw material liquid 16 has been fed, by using the pH adjuster feeding means 11, to feed the complexing agent to the mother liquid 14 while adjusting the pH of the mother liquid 14.

The value of the flow rate of the mother liquid 14 circulating in the circulating path 12 (circulating flow rate)/the feed amount of the raw material liquid 16 (raw material liquid flow rate) is not particularly limited. The value is preferably 400 or more and less than 2400 from the viewpoints of improving fundamental properties such as a bulk density, a tapping density, a particle diameter, and a BET specific surface area in a balanced manner without impairing the fundamental properties, and obtaining spherical particles having an excellent crystallinity, particularly preferably 1200 or more and less than 2400 from the viewpoints of obtaining an excellent crystallinity and further improving a bulk density, a tapping density, and a particle diameter, and particularly preferably 800 or more and less than 1200 from the viewpoint of further improving a crystallinity without impairing a bulk density, a tapping density, and a particle diameter.

By carrying out the step in the reaction apparatus 1, the transition metal hydroxide particles (herein, nickel/cobalt/zinc composite hydroxide particles, nickel/cobalt/magnesium composite hydroxide particles, nickel/cobalt/manganese composite hydroxide particles) can be obtained. By providing the overflow pipe 18 in the pH adjusting tank 10, the transition metal hydroxide particles can be continuously taken out from the pH adjusting tank 10.

By using the reaction apparatus 1 according to the embodiment example of the present invention, and further adding a metal salt solution containing cobalt ions or the like from the raw material liquid feeding means, the inorganic particles obtained as described above may be subjected to surface modification due to metallic coating of cobalt or the like. In the reaction apparatus 1 according to the embodiment example of the present invention, inorganic particles as oxyhydroxide particles of a transition metal can also be manufactured by further adding an oxidizer.

The reaction apparatus of the present invention may perform only the covering of the particles. That is, by separately charging the manufactured particles into the mother liquid of the reaction apparatus of the present invention in another reaction apparatus without using the reaction apparatus of the present invention, and adding the raw material liquid for covering from the raw material liquid feeding means to the circulating path, the covering may be provided on the particles.

### Examples

Thereafter, Examples of the present invention will be described below, but the present invention is not limited to these examples within a range not to exceed the scope of the present invention.

Examples 1, 2, and 3 and Comparative Examples 1 and 2 are examples for obtaining nickel/cobalt/zinc composite hydroxide particles. By using a reaction apparatus (a reaction apparatus including an overflow pipe) of the present invention designed in a continuous type in Examples 1 and 2, and a reaction apparatus (a reaction apparatus including no overflow pipe) of the present invention designed in a batch type in Example 3, transition metal hydroxide particles were manufactured under conditions shown in the following Table 1. In Example 3 using the reaction apparatus of the present invention of a batch type, a raw material liquid was fed to a mother liquid circulating in a circulating path in a state where the mother liquid was present at a depth capable of being stirred by a stirring blade in a pH adjusting tank, to start the reaction. After the pH adjusting tank was filled with the mother liquid, the feeding of the raw material liquid to the circulating path was stopped as an aging step, and the mother liquid was continuously circulated in the circulating path for 1 hour. In Comparative Example 1, by using an overflow type reaction apparatus in which neither a mother liquid nor a raw material liquid circulated (a reaction apparatus for directly feeding a raw material liquid, a pH adjuster, and a complexing agent from a top plate of a pH adjusting tank to a mother liquid in the pH adjusting tank) in place of the reaction apparatus of the present invention, transition metal hydroxide particles were manufactured under conditions shown in the following Table 1. In Comparative Example 2, by using a reaction apparatus for directly feeding a raw material liquid not in a circulating path but from a top plate of a pH adjusting tank to a mother liquid in the pH adjusting tank while causing the mother liquid to circulate in the circulating path in place of the reaction apparatus of the present invention (a pH adjuster and a complexing agent were also directly fed into the pH adjusting tank from the top plate), transition metal hydroxide particles were manufactured under conditions shown in the following Table 1.

Example 4 and Comparative Example 3 are examples for obtaining nickel/cobalt/magnesium composite hydroxide particles, and Examples 5 and 6 and Comparative Example 4 are examples for obtaining nickel/cobalt/manganese composite hydroxide particles. In Examples 4, 5, and 6, transition metal hydroxide particles were manufactured under conditions shown in the following Table 1 by using a reaction apparatus (a reaction apparatus including an overflow pipe) of the present invention designed in a continuation type. In Comparative Examples 3 and 4, by using an overflow type reaction apparatus in which neither a mother liquid nor a raw material liquid circulated (a reaction apparatus for directly feeding a raw material liquid, a pH adjuster, and a complexing agent from a top plate of a pH adjusting tank to a mother liquid in the pH adjusting tank) in place of the reaction apparatus of the present invention, transition metal hydroxide particles were manufactured under conditions shown in the following Table 1.

Sodium hydroxide of 32% by mass was used as the pH adjuster. Together with the pH adjuster, 100 g/L of an ammonium sulfate aqueous solution as the complexing agent was added, to keep an ammonium ion concentration in the mother liquid of the pH adjusting tank at 12 g/L. As the raw material liquid, a transition metal salt such as nickel sulfate or cobalt sulfate was used to manufacture transition metal hydroxide particles.

**[Table 1]**

| | | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|
| Raw material liquid addition position | | Circulating path | Circulating path | Circulating path | Circulating path | Circulating path | Circulating path | Top plate of pH adjusting tank | Top plate of pH adjusting tank | Top plate of pH adjusting tank | Top plate of pH adjusting tank |
| Raw material liquid flow rate | ml/min | 20,00 | 20,00 | 20,00 | 40,00 | 36,00 | 50,00 | 20,00 | 20,00 | 40,00 | 36,00 |
| Circulating flow rate | L/min | 24 | 40 | 40 | 40 | 40 | 40 | - | 40 | - | - |
| Circulating flow rate/raw material liquid flow rate | | 1200 | 2000 | 2000 | 1000 | 1111 | 800 | - | 2000 | - | - |
| Volume of pH adjusting tank | L | 50 | 50 | 50 | 50 | 50 | 50 | 50 | 50 | 50 | 50 |
| Temperature of mother liquid of pH adjusting tank | °C | 45,0 | 45,0 | 45,0 | 50,0 | 50,0 | 50,0 | 45,0 | 45,0 | 50,0 | 50,0 |
| Average secondary particle diameter (D50) | µm | 9,4 | 9,7 | 8,4 | 6,7 | 8,3 | 8,9 | 9,9 | 8,5 | 5,5 | 11,0 |
| Tap density | g/mL | 2,24 | 2,27 | 1,93 | 2,20 | 2,04 | 2,13 | 2,19 | 2,24 | 1,76 | 2,25 |
| Bulk density | g/mL | 1,75 | 1,87 | 1,44 | 1,67 | 1,57 | 1,71 | 1,71 | 1,66 | 1,30 | 1,70 |
| Bulk density/tap density | | 0,78 | 0,82 | 0,75 | 0,76 | 0,77 | 0,80 | 0,78 | 0,74 | 0,74 | 0,76 |
| Half width of diffraction peak of (101) plane by X-ray diffraction | deg. | 1,11 | 1,13 | 1,13 | 1,17 | 1,14 | 1,21 | 1,05 | 1,06 | 1,08 | 0,87 |
| BET specific surface area | m2/g | 12,2 | 13,7 | 8,7 | 11,3 | 20,0 | 15,9 | 8,3 | 11,0 | 14,1 | 5,7 |

Evaluation items of the transition metal hydroxide particles as a sample are as follows.

### (1) Average Secondary Particle Diameter (D50)

The average secondary particle diameter was measured with a particle size distribution measuring device (LA-950 manufactured by Horiba, Ltd.) (the principle was based on a laser diffraction-scattering method).

### (2) Tap Density

The tap density was measured with a constant-volume measuring method in techniques described in JIS R1628 by using a tap denser (KYT-4000 manufactured by Seishin Enterprise Co., Ltd.).

### (3) Bulk Density

A sample was caused to free-fall to fill a container with the sample, and the bulk density was measured from the volume of the container and the mass of the sample.

### (4) Half Width of Diffraction Peak of (101) Plane by X-Ray Diffraction

X diffraction measurement was performed under the following conditions using an X-ray diffraction device (RINT2200 manufactured by Rigaku Corporation).
X-rays: CuKα/40 kV/40 mA
Slit: DS/SS=1°, RS = 0.3 mm
Scanning Mode: FT measurement
Sampling Time: 0.4 seconds
Step Width: 0.01°

### (5) BET Specific Surface Area

The BET specific surface area was measured according to a one-point BET method by using a specific surface area measuring device (Macsorb manufactured by Mountech Co., Ltd.).

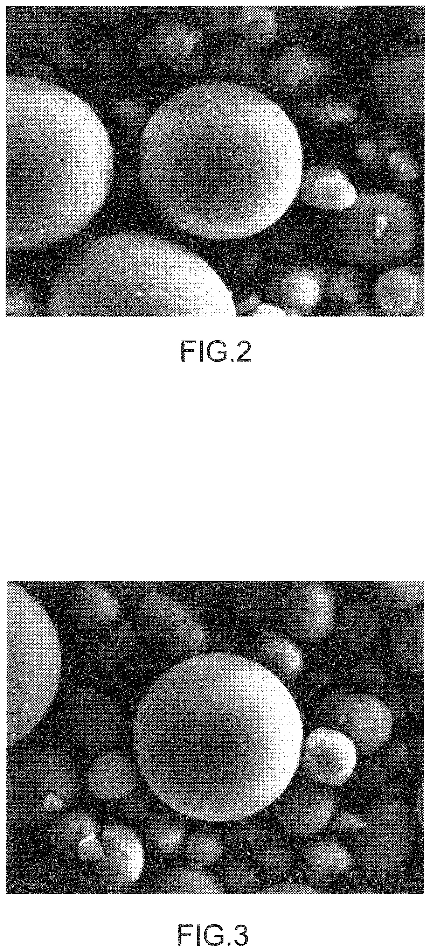

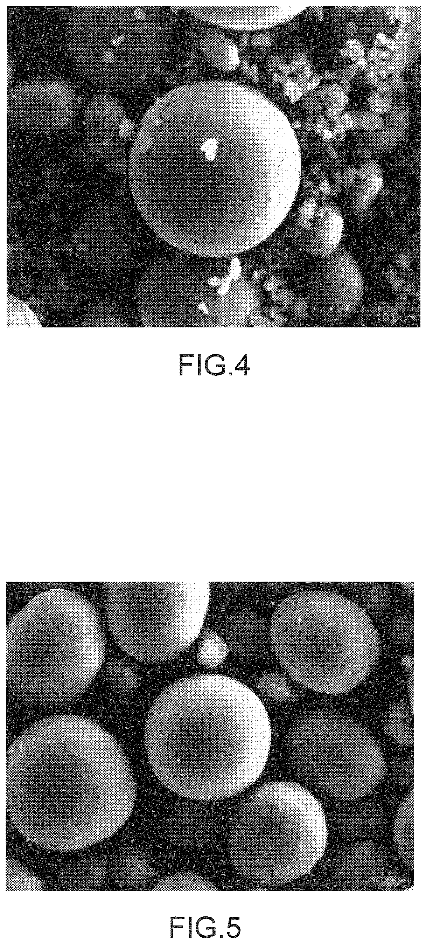

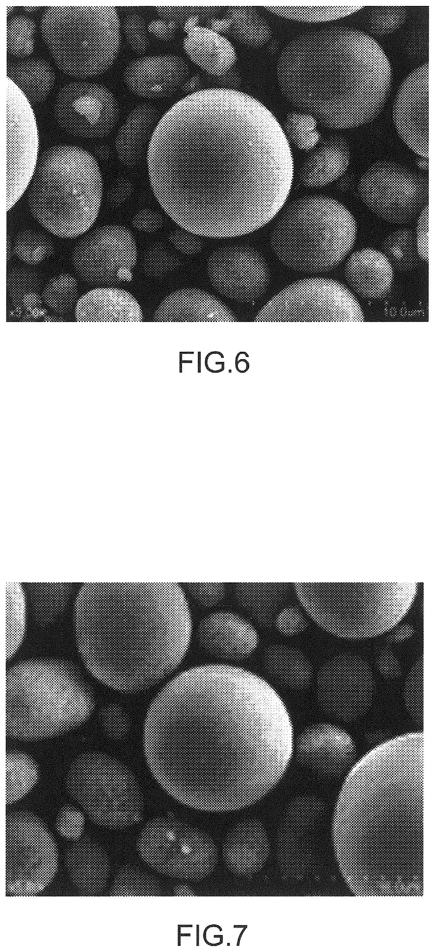

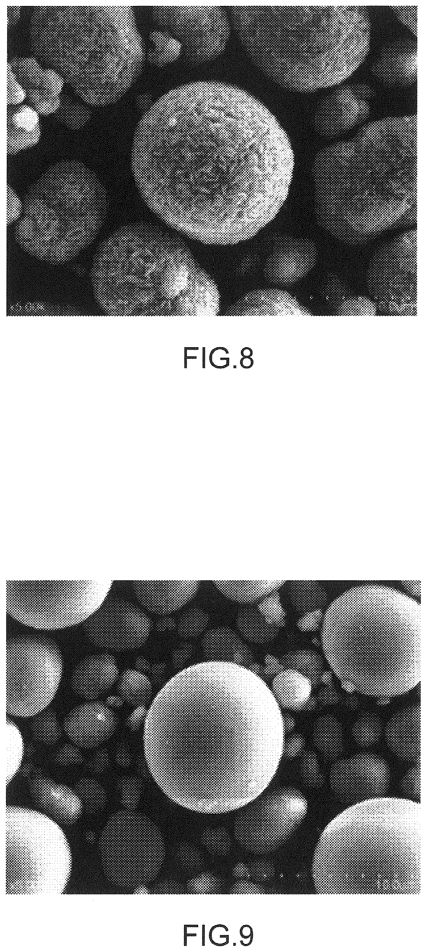

The SEM images (× 5000) of the transition metal hydroxide particles obtained in Examples 1 to 6 are shown in Figs. 2 to 7, and the SEM images (× 5000) of the transition metal hydroxide particles obtained in Comparative Examples 1 to 4 are shown in Figs 8 to 11.

As shown in the above Table 1, Examples 1 to 6 using the reaction apparatus of the present invention could improve fundamental properties such as an average secondary particle diameter (D50), a tap density, a bulk density, bulk density/tap density, and a BET specific surface area in a balanced manner without impairing the fundamental properties, and obtain transition metal hydroxide particles having an excellent crystallinity (half width of diffraction peak of (101) plane by X-ray diffraction) regardless of the composition of the transition metal hydroxide particles. In particular, from contrast of Example 2 with Comparative Example 2, wherein the conditions of a circulating flow rate and a raw material liquid flow rate in Example 2 were the same as those in Comparative Example 2, the use of the reaction apparatus of the present invention improved each of the average secondary particle diameter (D50), the tap density, the bulk density, the bulk density/tap density, and the BET specific surface area which constitute the fundamental properties. Furthermore, Examples 4 to 6 in which the raw material liquid flow rate was 36 to 50 ml/min, and circulating flow rate/raw material liquid flow rate was 800 to 1111 could obtain excellent transition metal hydroxide particles having a BET specific surface area and a crystallinity further improved in a balanced manner among the fundamental properties. From Figs. 2 to 7, in Examples 1 to 6, the shapes of the transition metal hydroxide particles could be more uniformly spheroidized.

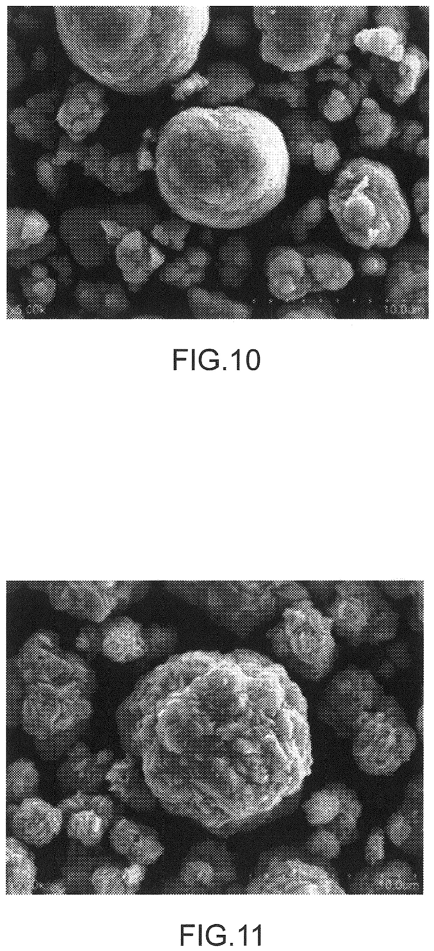

On the other hand, Comparative Examples 1 to 4 could not improve the fundamental properties in a balanced manner regardless of the composition of the transition metal hydroxide particles. In particular, Comparative Examples 1 to 4 could not obtain a good crystallinity as compared with Examples 1 to 6. In particular, Comparative Example 4 in which the raw material liquid flow rate was 36 ml/min had a BET specific surface area remarkably decreased among the fundamental properties as compared with Example 5 in which the raw material liquid flow rate was similarly 36 ml/min. Furthermore, from Figs. 10 and 11, the raw material liquid flow rate was 36 to 40 ml/min, and more than 20 ml/min in Comparative Example 1. In Comparative Examples 3 and 4 in which the temperature of the mother liquid of the pH adjusting tank was 50°C, and higher than 45°C in Comparative Example 1, the shapes of the transition metal hydroxide particles could not be uniformly spheroidized.

### Industrial Applicability

The present invention can improve fundamental properties such as a bulk density, a tapping density, a particle diameter, and a BET specific surface area in a balanced manner without impairing the fundamental properties, and obtain particles having an excellent crystallinity, whereby the present invention has a high utility value, for example, in the field of manufacture of a positive electrode active material precursor of a rechargeable battery.

### List of Reference Signs

1 reaction apparatus
10 pH adjusting tank
11 pH adjuster feeding means
12 circulating path
13 raw material liquid feeding means

## Claims

1. A reaction apparatus comprising:
a pH adjusting tank for adjusting a pH of a mother liquid stored therein;
a pH adjuster feeding means for feeding a pH adjuster to the pH adjusting tank;
a circulating path for continuously extracting a portion of the mother liquid having the adjusted pH from the pH adjusting tank, and returning the extracted mother liquid to the pH adjusting tank; and
a raw material liquid feeding means for feeding a raw material liquid to the mother liquid circulating in the circulating path.

2. The reaction apparatus according to claim 1, wherein the raw material liquid is fed to the mother liquid from a direction parallel to, or an acute angle direction with respect to, a flow direction of the mother liquid circulating in the circulating path.

3. The reaction apparatus according to claim 1 or 2, wherein the circulating path is a tubular body, and the raw material liquid is fed by the raw material liquid feeding means from a region of the tubular body.

4. The reaction apparatus according to any one of claims 1 to 3, wherein an overflow pipe for taking out a reaction product is provided in the pH adjusting tank.

5. The reaction apparatus according to any one of claims 1 to 4 for manufacturing a positive electrode active material precursor of a rechargeable battery.

6. A method for manufacturing inorganic particles comprising the steps of:
continuously feeding a raw material liquid to a mother liquid circulating in a circulating path for continuously extracting a portion of the mother liquid having an adjusted pH from a pH adjusting tank, and returning the extracted mother liquid to the pH adjusting tank; and
continuously feeding a pH adjuster to the pH adjusting tank storing the mother liquid with the fed raw material liquid, to adjust a pH of the mother liquid.

7. The method for manufacturing inorganic particles according to claim 6, wherein the raw material liquid is fed to the mother liquid from a direction parallel to, or an acute angle direction with respect to, a flow direction of the mother liquid circulating in the circulating path.

8. The method for manufacturing inorganic particles according to claim 6 or 7, wherein the circulating path is a tubular body, and the raw material liquid is fed from a region of the tubular body.

9. The method for manufacturing inorganic particles according to any one of claims 6 to 8, wherein an overflow pipe for taking out the inorganic particles is provided in the pH adjusting tank.

10. The method for manufacturing inorganic particles according to any one of claims 6 to 9, wherein a value of a flow rate of the mother liquid circulating in the circulating path/a feed flow rate of the raw material liquid is 400 or more and less than 2400.

11. The method for manufacturing inorganic particles according to any one of claims 6 to 10, wherein the raw material liquid contains a transition metal ion.

12. The method for manufacturing inorganic particles according to any one of claims 6 to 11, wherein the pH adjuster further contains a complexing agent.

13. The method for manufacturing inorganic particles according to any one of claims 6 to 12, wherein the inorganic particles manufacture a positive electrode active material precursor of a rechargeable battery.
